# EUROPEAN PATENT APPLICATION

(11) **EP 0 919 890 A1**
(43) Date of publication of application: **02.06.1999**
(21) Application number: 98203968.7
(22) Date of filing: 26.11.1998
(51) Int. Cl.: G05B 17/02

(54) **Operating simulator for elements sensing various physical quantities and that are used to drive and control various equipments**

(30) Priority: 01.12.1997 IT PN970067
(71) Applicant: Rastelli, Paolo, 33087 Pasiano (PN) (IT)
(72) Inventor: Rastelli, Paolo, 33087 Pasiano (PN) (IT)
(74) Representative: Da Riva, Ermanno

(57) **Abstract**

Operating simulator for elements sensing various physical quantities and that are used to drive and control various equipments. The simulator is applicable in particular to the electric and/or electronic circuits in the place of a sensor ( 1 ) with resistive operation for the driving of respective devices ( 2 ) of various kind and for various utilizations. The connection of said simulator ( 3 ) in the place of the sensor ( 1 ) is suitable to allow , in a simple and rapid way, the operating test of the sensor ( 1 ). Such simulator ( 3 ) is constituted by at least one resistive element as, for example, a rheostat ( R ) which is suitable to reproduce a resistance value equivalent to that generated by the corresponding sensor ( 1 ) applied to the relative devices ( 2 ) which are driven and controlled by the same sensor ( 1 ) in order to test their operation.

## Description

The invention relates to a device applicable in particular to the motor-car field and in other various fields because suitable to simulate and to reproduce physical conditions which are regulating and controlling the operation of further and more or less complex devices. The device forming the object of the present invention simulates the operation of various sensors, as for example, a bulb sensing the oil-level or the oil-pressure of an engine or a bulb sensing the temperatur in the cooling system of an engine , or eventually the temperature of the air-conditioning and/or of the air-climatizing system and others. Such simulation allows to avoid various and expensive systems which are usually adopted.

As it is known, various kind of normally used sensors are based on the change of their resistance values following the variations of the parameter that is sensed.

As it is also known, for example in the case of motor-car engines, "standard" sensors for sensing the pressure, the temperature etc. are generally used in the place of the probably broken or damaged sensors in order to test their operation and to decide their replacement. If the "standard" sensor produces a correct electrical resistivity or better a correct signal, the tested sensor is not broken or damaged and the faulting must be searched in another place.

Clearly ,such kind of empirical test involves the operator not only to update every year his technical manuals but also to spend a large sum of money on "standard" sensors, that is to say spare parts, to be used for the above mentioned tests. In addition to the expenditure for the "standard" sensors, the operator bears also great repairing costs for the large use of labor, because , in some cases, it is indispensable to start the repairing operations with a cold engine and to follow the course of the engine heating together with the resistance variations generated by the "standard" sensor. Therefore, there are important time and labor costs which, in some cases, are higher than the cost of the same spare part.

The aim of the present invention is to obviate the above-described drawbacks by means of the device forming the object of the present invention and which is, as a whole, constituted by a real simulator. Such simulator generates electrical resistance values which are variable in conformity with the use and the sensor to be tested. Such electrical resistance values can be preconfigurated by the operator according to the requirements of the case.

For example, if we must test the reliability of the engine temperature measurements on some conditions, we will set on the simulator the electrical resistivity corresponding to such a parameter and, afterwards, we will connect the simulator to the engine. If the simulator generates a resistance equal to that generated by the thermometer to be tested and the thermometer indicates a different temperature, it follows that the thermometer is not broken or damaged and the faulting is to be searched in another place, perhaps, the faulting could be searched using the same simulator.

In order to better understand the features and the advantages obtainable by the simulator forming the object of the present invention, this simulator is hereinafter described, by way of a not limitative example only, and with reference to the accompanying drawing, wherein :
- Fig. 1 shows in a schematic view the normal disposition in a general electrical circuit of a sensor used for driving and/or controlling a relative device of variuos kind ;
- Fig. 2 shows, as in Fig. 1, the application of the simulator forming the object of the invention in the place of the sensor to be tested ;
- Fig. 3 shows in schematic perspective view a first possible embodiment, and its application, of the solution corresponding to that shown in Fig. 2 ;
- Fig. 4 shows in schematic perspective view a further possible embodiment of the simulator according to the invention and its use by means of the utilization of the ohmmeter-part of an ordinary volt-ohm-milliammeter ;
- Fig. 5 shows a perspective view a possible embodiment of the simulator and its application , wherein the simulation part shown in Fig. 4 is housed in only one instrument.

In the above-mentioned figures, the common items are marked with the same reference numerals.

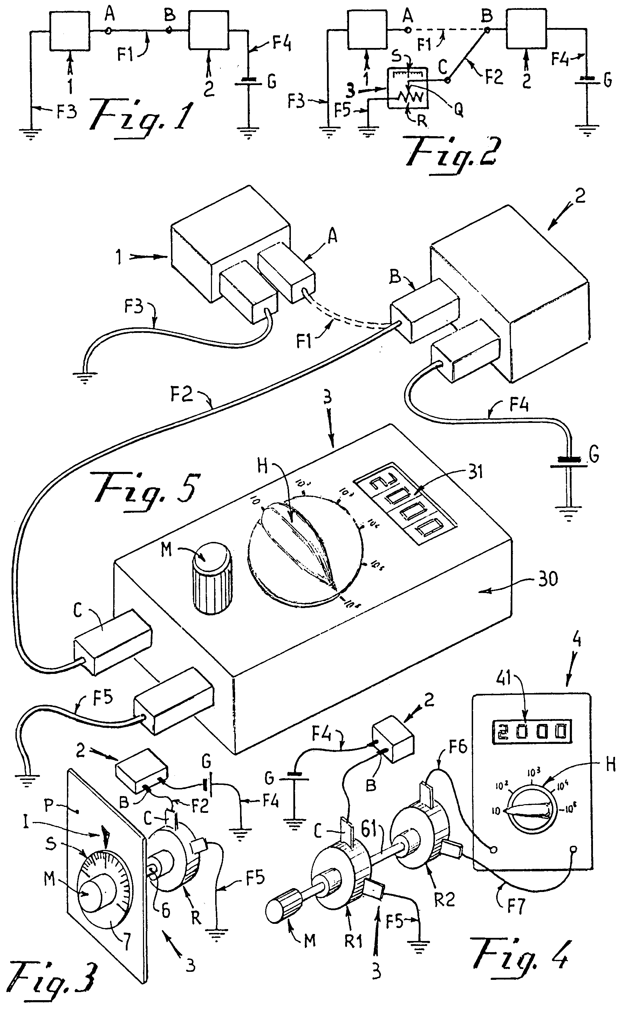

With reference to Fig. 1, it is to be noticed the sensor 1 that drives the generical device 2. The sensor 1 is connected to the ground by means of the wire F3. The device 2 is interconnected to the ground by means of a suitable current generator, as a usual battery, that is interposed on the wire F4.

The sensor 1 and the device 2 are interconnected by means of the wire F1 that is connecting the respective connectors A and B.

The sensor 1 is normally constituted by a resistor that changes its resistance , owing to the variations of the physical quantity to be sensed , and with that the sensor will drive the device 2 in a per se known manner.

After the synthetic description of the operation of the generical driving and controlling circuit, that is usually adopted for various utilizations, it is now described, with reference to the following Fig.2, the utilization of the simulator forming the object of the present invention. As it can be clearly seen, the electrical circuit of Fig. 2 is substantially the same circuit shown in Fig. 1. The simulator 3 is used to test the reliability of the sensor 1 and is essentially constituted by a rheostat R having an end connected to the ground. A slider Q is engaged on the rheostat and has its connector C connected to the wire F2 previously disconnected from the connector A of the sensor 1.

The slider Q is provided with an index that allows the reading of the resistance value corresponding to the position of the slider Q on a suitable reading scale S .

The utilization of the simulator 3 is hereinafter described with reference to the possible use of the sensor 1 as element sensing the temperature, the predeterminated value of which causes the excitation of a relay that is constituting the device 2. As a consequence, the device 2 will start, in a known way, the operation of a further device , as a fan , a pump or other.

The sensor 1 , during its correct operation, will change its resistance in conformity with the changes in the sensed temperature and when the temperature reaches the predetermined value it causes the starting of the device 2 , that is to say, the excitation of said relay.

Supposing that the sensor 1 causes the start of the device 2 at a resistance value , for example of 2000 ohms, the index of the slider Q of the rheostat R will be disposed in the position corresponding to the same resistance value on the scale S.

The simulator 3, that is disposed in such a manner, will generate the same resistance value of the sensor 1 which causes the starting of the device 2.

Consequently, if the device 2 will be started ( that is if the relay will be excitated) it will result that the sensor 1 is broken and has to be replaced.

If, on the contrary, the device 2 will not be started (that is if the relay will not be excitated) it will result that the faulting is not in the sensor 1 but it is in the device 2.

In the Figure 3 is clearly shown a possible embodiment of the simulator 3 utilizing a rheostat R of circular kind, that is commonly available on the market. On the control shaft 6 of the rheostat R is placed the regulating knob M that is provided with a discoidal element 7. On the discoidal element 7 is marked a reading scale S that allows to set a desired resistance value with reference to the index I marked on the support plate P. Clearly, the reported circuital connections correspond to those of the circuit diagram shown in the Figure 2.

Figure 4 shows a further embodiment of the simulator 3 according to the invention and it is to be noticed that two rheostats R1 and R2 are disposed on the same control shaft 61 in the place of only one rheostat R . The rheostat R1 is identical to the rheostat R2 and they are identically placed , that is to say they are applied between themselves in such a way as all values of the first rheostat R1 correspond exactly to the values of the second rheostat R2.

Such rheostats R1 and R2 will be contemporaneously controlled by the regulating knob M placed on said control shaft 61.

According to this embodiment , a first rheostat R1 works as the rheostat R of the previous embodiment, that is to say it will be set in such a way as to generate a predetermined resistance which is corresponding to the desired simulation resistance, and a second rheostat R2 will be connected , by means of the wires F6 and F7, to the ohmmeter-part of an ordinary volt-ohm-milliammeter 4 that is provided with a taper H and with a digital display 41 or an analog indicator.

Obviously, the circuital connections of the first rheostat R1 correspond to those of the circuit diagram shown in the Fig. 2.

In the end, Fig. 5 shows a more rational and complete embodiment of the simulator 3. According to this embodiment the grouped rheostats R1 and R2 of the embodiment shown in the Fig. 4 are disposed in a only one case 30 of an instrument 3.

Such instrument 3 comprises only one group for measuring the resistance value. Such measuring group is provided, as in the ordinary volt-ohm-milliammeters, with a taper H and with a digital display 41 or an analog indicator.

Also in this last embodiment , the circuital connections correspond to those of the circuit diagram shown in the Fig. 2.

From what stated it is clear that that the simulator forming the object of the present invention affords cosiderable advantages.

In the first place, the operator , in particular in the car repairing field, will not need to store a large quantity of sensors (spare parts), that is to say sensors for various temperatures, pressures, levels , etc. corresponding to the various car devices. Moreover, the operator will not need to disassemble the car parts under repair in order to reach the eventually damaged or broken element, then to remove this (sensor) and to replace the sensor with an equivalent sensor. If the sensor is not damaged or broken it will give the same result to the signal detecting instrument or to the signal detecting device housed in the car.

It is well understood that the above-described system allows to avoid , for example, the checkout of various control devices by means of their replacement with other previously purchased devices.

In conclusion, the checkout operations of various sensors result very simple, easy to do , labour-saving and , consequently, they reduce the working time and the investment of capital in various sensors and/or devices for the repairs.

With the simulator forming the object of the invention it will be possible to obtain the described advantages as well as other advantages. Moreover, the same simulator can be used in completely different fields where it results suitable to the purpose and then utilizable in all industrial fields etc..

It is well understood that, apart from the already described variations, further modifications and variations may be made to the simulator forming the object of the present invention without departing however from the scope defined by the following claims with reference to the accompanying drawings and thence from the protection extent of the present industrial invention.

## Claims

1. Operating simulator, for elements sensing various physical quantities and that are used to drive and control various equipments, applicable in particular to the electric and/or electronic circuits in the place of a sensor ( 1 ) with resistive operation for the driving of respective devices ( 2 ) of various kind and for various utilizations, the connection of said simulator ( 3 ) in the place of the sensor ( 1 ) being suitable to allow, in a simple and rapid way, the operating test of the sensor ( 1 ), said simulator being characterized in that it is constituted by at least one resistive element as, for example, a rheostat ( R ) which is suitable to reproduce a resistance value equivalent to that generated by the corresponding sensor ( 1 ) applied to the relative devices ( 2 ) which are driven and controlled by the same sensor ( 1 ) in order to test their operation.

2. Simulator according to the claim 1, characterized in that said resistive element ( 3 ) can be preferably constituted by a rheostat ( R ) provided with a reading scale ( S ) which is suitable to allow the disposition of the slider ( Q ) in a position corresponding to the desired resistance value for the test of the sensor ( 1 ).

3. Simulator according to the previous claims characterized in that the simulation element and the reading element of the set resistive value are constituted by two identical rheostats ( R1 and R2 ) which are both identically and mutually placed in such a way as the values of the first rheostat ( R1 ) correspond always and exactly to the values of the second rheostat ( R2 ), such rheostats ( R1 - R2 ) resulting both mechanically and mutually linked by one control shaft ( 61 ) which can be driven by a respective regulating knob ( M ), a first rheostat ( R1 ) being applied in the place of the sensor ( 1 ) to be tested and the second rheostat ( R2 ) being connected to the resistivity measuring part of an ordinary volt-ohm-milliammeter ( 4 ) which is suitable to allow the reading of the ohmic value set by the first rheostat ( R1 ).

4. Simulator according to the claims 1 and 3, characterized in that the two rheostats ( R1 and R2 ) are disposed in a only one case ( 30 ) forming a free-standing instrument ( 3 ) and provided , as the volt-ohm-milliameters, with a taper ( H ) that is suitable to allow the reading of ohmic values which are very different among them, moreover either the volt-ohm-milliameter ( 4 ) or the instrument ( 3 ) will be provided with suitable devices for reading the set values, such signal reading and/or signal transducing system can be of analog kind or of digital kind in an indifferent way with respect to the operation of the simulator forming the object of the invention. The whole as substantially described and illustrated and for the specified purposes.
